(19) Europäisches Patentamt
European Patent Office
Office européen des brevets

(11) EP 3 441 413 A1

(12) EUROPEAN PATENT APPLICATION

(43) Date of publication:
13.02.2019 Bulletin 2019/07

(21) Application number: 17185942.4

(22) Date of filing: 11.08.2017

(51) Int Cl.:
C08G 63/183 (2006.01)
C11D 1/02 (2006.01)
C11D 3/22 (2006.01)
C11D 3/37 (2006.01)
C08L 1/28 (2006.01)
C11D 11/00 (2006.01)
C11D 17/04 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: The Procter & Gamble Company
Cincinnati, OH 45202 (US)

(72) Inventors:
- VAN ELSEN, Katrien Andrea Lieven
  1853 Strombeek-Bever (BE)
- DEPOOT, Karel Jozef Maria
  1853 Strombeek-Bever (BE)
- KEULEERS, Robby Renilde Francois
  1853 Strombeek-Bever (BE)

(74) Representative: Pickford, James Lawrence
Procter & Gamble
Technical Centres Limited
Whitley Road
Longbenton
Newcastle upon Tyne NE12 9TS (GB)

# (54) WATER-SOLUBLE UNIT DOSE ARTICLE COMPRISING A POLYESTER TEREPHTHALATE AND A CARBOXYMETHYLCELLULOSE

(57) A water-soluble unit dose article comprising a water-soluble film and a liquid laundry detergent composition, said composition comprising;
a. between 0.1% and 10% by weight of a first polymer, wherein the first polymer is a polyester terephthalate; and
b. between 0.1% and 10% by weight of a second polymer, wherein the second polymer is carboxymethylcellulose or a derivative thereof; and
c. up to 50% by weight of a non-soap anionic surfactant.

A process for washing fabrics comprising the steps;
a. Combining the said article with water by a factor of between 300 and 3000 fold to form a wash liquor;
b. Combining the wash liquor with at least one fabric comprising natural fibres.

Use of a combination of a polyester terephtalate and a carboxymethylcellulose to improve retention of anionic surfactant remaining on fabrics comprising natural fibres, following a wash operation.

FIG. 1.

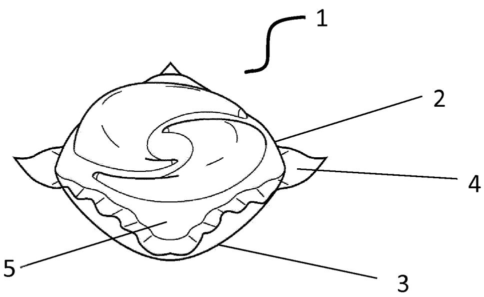


EP 3 441 413 A1

## Description

### FIELD OF THE INVENTION

The present invention relates to water-soluble unit dose articles containing polyester terephthalate and carboxymethylcellulose and processes of washing fabrics using said water-soluble unit dose articles.

### BACKGROUND OF THE INVENTION

Water-soluble unit dose articles are liked by consumers as they are convenient and efficient to use. Such water-soluble unit dose articles often comprise laundry detergent compositions.

Consumers desire that following the laundry wash operation, their fabrics are clean and feel soft. It is well known that anionic surfactants provide softness to cotton fabrics especially terry towels and are even preferred over traditional alternative softening technologies given their lower compromise on water absorbency capacity of cotton fabrics. This property is especially desired for terry towels whose primary function is to absorb water after for example a consumer showering. Therefore, it is desired to maximize the amount of remaining anionic surfactants on terry towels following the wash operation to provide softness benefits.

Due to the compact nature of unit dose articles, there is finite space available for formulating actives into the composition. Therefore, there is a desire to improve retention of anionic surfactants on fabrics without addition of further chemistries, such as deposition aids etc., in addition to actives already formulated into detergent composition to provide various benefits.

It was surprisingly found that formulation of a dual polymer system (polyester terephthalate and carboxymethylcellulose) provided improved anionic surfactant retention on cotton terry towels following the wash operation. This is especially surprising considering that when formulating the individual polymers alone, a decrease in anionic surfactant retention on cotton terry towels was observed. Furthermore, both polymers provide further cleaning benefits as either soil release polymers or anti-soil redeposition polymers, meaning there is no need for addition of single purpose chemistries such as deposition aids etc.

### SUMMARY OF THE INVENTION

A first aspect of the present invention is a water-soluble unit dose article comprising a water-soluble film and a liquid laundry detergent composition, wherein the liquid laundry detergent composition comprises;

a. between 0.1% and 10%, preferably between 0.15% and 5% even more preferably between 0.2% and 4%, most preferably between 0.25 % and 3% by weight of the liquid laundry detergent composition of a first polymer, wherein the first polymer is a polyester terephthalate; and

b. between 0.1% and 10%, preferably between 0.2% and 5% even more preferably between 0.3% and 4%, most preferably between 0.4% and 3% by weight of the liquid laundry detergent composition of a second polymer, wherein the second polymer is carboxymethylcellulose or a derivative thereof; and

c. up to 50%, preferably between 5% and 50%, more preferably between 7.5% and 45%, even more preferably between 10% and 40%, or even more preferably between 12% and 37%, most preferably between 15% and 30% by weight of the liquid laundry detergent composition of a non-soap anionic surfactant.

A second aspect of the present invention is a process for washing fabrics comprising the steps of;

a. Combining a water-soluble unit dose article according to the present invention with sufficient water to dissolve the water-soluble film and dilute the laundry detergent composition by a factor of between 300 and 3000 fold to form a wash liquor;

b. Combining the wash liquor with at least one fabric to be washed, wherein the at least one fabric comprises natural preferably cotton fibres and wherein the fabric preferably is a terry towel.

A third aspect of the present invention is the use of a combination of a first polymer and a second polymer to improve retention of anionic surfactant remaining on fabrics, preferably terry towels, comprising natural preferably cotton fibres, following a wash operation, wherein the first and second polymers are formulated into a water-soluble unit dose article and wherein the first polymer is a polyester terephtalate polymer and the second polymer is carboxymethylcellulose or a derivative thereof.

## BRIEF DESCRIPTION OF THE DRAWINGS

FIG.1 is a water-soluble unit dose article according to the present invention.

## DETAILED DESCRIPTION OF THE INVENTION

### Water-soluble unit dose article

The present invention discloses a water-soluble unit dose article comprising a water-soluble film and a liquid laundry detergent composition. The water-soluble film and the liquid detergent composition are described in more detail below.

The water-soluble unit dose article comprises the water-soluble film shaped such that the unit-dose article comprises at least one internal compartment surrounded by the water-soluble film. The unit dose article may comprise a first water-soluble film and a second water-soluble film sealed to one another such to define the internal compartment. The water-soluble unit dose article is constructed such that the detergent composition does not leak out of the compartment during storage. However, upon addition of the water-soluble unit dose article to water, the water-soluble film dissolves and releases the contents of the internal compartment into the wash liquor.

The compartment should be understood as meaning a closed internal space within the unit dose article, which holds the detergent composition. During manufacture, a first water-soluble film may be shaped to comprise an open compartment into which the detergent composition is added. A second water-soluble film is then laid over the first film in such an orientation as to close the opening of the compartment. The first and second films are then sealed together along a seal region.

The unit dose article may comprise more than one compartment, even at least two compartments, or even at least three compartments. The compartments may be arranged in superposed orientation, i.e. one positioned on top of the other. In such an orientation the unit dose article will comprise three films, top, middle and bottom. Alternatively, the compartments may be positioned in a side-by-side orientation, i.e. one orientated next to the other. The compartments may even be orientated in a 'tyre and rim' arrangement, i.e. a first compartment is positioned next to a second compartment, but the first compartment at least partially surrounds the second compartment, but does not completely enclose the second compartment. Alternatively one compartment may be completely enclosed within another compartment.

Wherein the unit dose article comprises at least two compartments, one of the compartments may be smaller than the other compartment. Wherein the unit dose article comprises at least three compartments, two of the compartments may be smaller than the third compartment, and preferably the smaller compartments are superposed on the larger compartment. The superposed compartments preferably are orientated side-by-side.

In a multi-compartment orientation, the detergent composition according to the present invention may be comprised in at least one of the compartments. It may for example be comprised in just one compartment, or may be comprised in two compartments, or even in three compartments.

Each compartment may comprise the same or different compositions. The different compositions could all be in the same form, or they may be in different forms.

The water-soluble unit dose article may comprise at least two internal compartments, wherein the liquid laundry detergent composition is comprised in at least one of the compartments, preferably wherein the unit dose article comprises at least three compartments, wherein the detergent composition is comprised in at least one of the compartments.

FIG.1 discloses a water-soluble unit dose article (1) according to the present invention. The water-soluble unit dose article (1) comprises a first water-soluble film (2) and a second water-soluble film (3) which are sealed together at a seal region (4). The liquid laundry detergent composition (5) is comprised within the water-soluble soluble unit dose article (1).

### Water-soluble film

The film of the present invention is soluble or dispersible in water. The water-soluble film preferably has a thickness of from 20 to 150 micron, preferably 35 to 125 micron, even more preferably 50 to 110 micron, most preferably about 76 micron.

Preferably, the film has a water-solubility of at least 50%, preferably at least 75% or even at least 95%, as measured by the method set out here after using a glass-filter with a maximum pore size of 20 microns:

> 5 grams ± 0.1 gram of film material is added in a pre-weighed 3L beaker and 2L ± 5ml of distilled water is added. This is stirred vigorously on a magnetic stirrer, Labline model No. 1250 or equivalent and 5 cm magnetic stirrer, set at 600 rpm, for 30 minutes at 30°C. Then, the mixture is filtered through a folded qualitative sintered-glass filter with a pore size as defined above (max. 20 micron). The water is dried off from the collected filtrate by any conventional

method, and the weight of the remaining material is determined (which is the dissolved or dispersed fraction). Then, the percentage solubility or dispersability can be calculated.

Preferred film materials are preferably polymeric materials. The film material can, for example, be obtained by casting, blow-moulding, extrusion or blown extrusion of the polymeric material, as known in the art.

Preferred polymers, copolymers or derivatives thereof suitable for use as pouch material are selected from polyvinyl alcohols, polyvinyl pyrrolidone, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. More preferred polymers are selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, and most preferably selected from polyvinyl alcohols, polyvinyl alcohol copolymers and hydroxypropyl methyl cellulose (HPMC), and combinations thereof. Preferably, the level of polymer in the pouch material, for example a PVA polymer, is at least 60%. The polymer can have any weight average molecular weight, preferably from about 1000 to 1,000,000, more preferably from about 10,000 to 300,000 yet more preferably from about 20,000 to 150,000.

Preferably, the water-soluble film comprises polyvinyl alcohol polymer or copolymer, preferably a blend of polyvinylalcohol polymers and/or polyvinylalcohol copolymers, preferably selected from sulphonated and carboxylated anionic polyvinylalcohol copolymers especially carboxylated anionic polyvinylalcohol copolymers, most preferably a blend of a polyvinylalcohol homopolymer and a carboxylated anionic polyvinylalcohol copolymer.

Preferred films exhibit good dissolution in cold water, meaning unheated distilled water. Preferably such films exhibit good dissolution at temperatures of 24°C, even more preferably at 10°C. By good dissolution it is meant that the film exhibits water-solubility of at least 50%, preferably at least 75% or even at least 95%, as measured by the method set out here after using a glass-filter with a maximum pore size of 20 microns, described above.

Preferred films are those supplied by Monosol under the trade references M8630, M8900, M8779, M8310.

The film may be opaque, transparent or translucent. The film may comprise a printed area.

The area of print may be achieved using standard techniques, such as flexographic printing or inkjet printing.

The film may comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000rpm.

Liquid laundry detergent composition

The water-soluble unit dose article comprises a liquid laundry detergent composition. The term ’liquid laundry detergent composition’ refers to any laundry detergent composition comprising a liquid capable of wetting and treating a fabric, and includes, but is not limited to, liquids, gels, pastes, dispersions and the like. The liquid composition can include solids or gases in suitably subdivided form, but the liquid composition excludes forms which are non-fluid overall, such as tablets or granules.

Without wishing to be bound by theory, preferably the polymers are formulated into a liquid laundry detergent as this enables faster release into the wash liquor. This is especially beneficially in quick and cold wash cycles in which the risk of the being stuck in undissolved powder pasty phase is minimised.

The liquid detergent composition can be used in a fabric hand wash operation or may be used in an automatic machine fabric wash operation.

The liquid laundry detergent composition comprises between 0.1% and 10%, preferably between 0.15% and 5% even more preferably between 0.2% and 4%, most preferably between 0.25% and 3% by weight of the liquid laundry detergent composition of a first polymer, wherein the first polymer is a polyester terephthalate. The first polymer may be fully dissolved in the liquid laundry detergent composition, may be partially dissolved or maybe a dispersed particulate, or a mixture thereof. The first polymer is described in more detail below.

The liquid laundry detergent composition comprises between 0.1% and 10%, preferably between 0.2% and 5% even more preferably between 0.3% and 4%, most preferably between 0.4% and 3% by weight of the liquid laundry detergent composition of a second polymer, wherein the second polymer is carboxymethylcellulose or a derivative thereof. The second polymer may be fully dissolved in the liquid laundry detergent composition, may be partially dissolved or maybe a dispersed particulate, or a mixture thereof. The second polymer is described in more detail below.

The liquid laundry detergent composition comprises up to 50%, preferably between 5% and 50%, more preferably between 7.5% and 45%, even more preferably between 10% and 40%, or even more preferably between 12% and 37%, most preferably between 15% and 30% by weight of the liquid laundry detergent composition of a non-soap anionic surfactant. The non-soap anionic surfactant is described in more detail below.

Preferably, the liquid laundry detergent composition comprises between 0.1% and 10%, preferably between 0.2% and 7%, more preferably between 0.3% and 5% by weight of the liquid laundry detergent composition of a combination of the first polymer and the second polymer. In other words, the total concentration of the two polymers may be between 0.1% and 10%, preferably between 0.2% and 7%, more preferably between 0.3% and 5% by weight of the liquid laundry detergent composition.

The liquid laundry detergent composition preferably comprises between 0% and 10%, preferably between 0.01% and 8%, more preferably between 0.1% and 6%, most preferably between 0.15% and 4% by weight of the liquid laundry detergent composition of a non-ionic surfactant. Preferably, the non-ionic surfactant is selected from alcohol alkoxylate, an oxo-synthesised alcohol alkoxylate, Guerbet alcohol alkoxylates, alkyl phenol alcohol alkoxylates or a mixture thereof.

Preferably, the liquid laundry detergent composition comprises between 1.5% and 20%, more preferably between 2% and 15%, even more preferably between 3% and 10%, most preferably between 4% and 8% by weight of the liquid detergent composition of soap, preferably a fatty acid salt, more preferably an amine neutralized fatty acid salt, wherein preferably the amine is an alkanolamine more preferably selected from monoethanolamine, diethanolamine, triethanolamine or a mixture thereof, more preferably monoethanolamine.

The liquid laundry detergent composition preferably comprises a cationic polysaccharide, preferably selected from cationically modified hydroxyethyl cellulose, cationically modified hydroxypropyl cellulose, cationically and hydrophobically modified hydroxyethyl cellulose, cationically and hydrophobically modified hydroxypropyl cellulose, or a mixture thereof, more preferably cationically modified hydroxyethyl cellulose, cationically and hydrophobically modified hydroxyethyl cellulose, or a mixture thereof. The cationic polysaccharide preferably is present between 0.05% and 3%, preferably between 0.1% and 2%, more preferably between 0.2% and 1%, most preferably between 0.25% and 0.75% by weight of the liquid laundry detergent composition.

Preferably, the liquid laundry detergent composition comprises an alkoxylated polyethyleneimine, preferably an ethoxylated polyethyleneimine. Preferably, the liquid laundry detergent composition comprises between 0.1% and 10%, preferably between 0.5% and 7%, more preferably between 1% and 5% by weight of the liquid laundry detergent composition of the ethoxylated polyethyleneimine.

The water-soluble unit dose article preferably comprises 15% or less by weight of the unit dose article of water, preferably comprising between 0.1% and 15%, more preferably between 1% and 12.5% by weight of the unit dose article of water.

Preferably, the water-soluble unit dose article comprises between 10% and 60%, preferably between 12% and 50%, most preferably between 15% and 40% by weight of the liquid laundry detergent composition of a non-aqueous solvent, preferably wherein the non-aqueous solvent is selected from 1,2-Propanediol, glycerol, sorbitol, dipropylene glycol, tripropyleneglycol, or a mixture thereof.

The liquid laundry detergent composition may further comprise an adjunct ingredient selected from further polymers, builders, dye transfer inhibiting agents, dispersants, enzymes, enzyme stabilizers, catalytic materials, bleach, bleach activators, polymeric dispersing agents, antiredeposition agents, suds suppressors, aesthetic dyes, opacifiers, perfumes, perfume delivery systems, structurants, hydrotropes, processing aids, pigments and mixtures thereof.

Preferably, the liquid laundry detergent composition has a pH between 6 and 10, more preferably between 6.5 and 8.9, most preferably between 7 and 8. The pH of the liquid laundry detergent composition may be measured as a 10% dilution in demineralized water at 20°C.

First polymer

The first polymer is a polyester terephthalate. Preferably, the first polymer is a polyester terephthalate backbone grafted with one or more anionic groups, more preferably, the first polymer is an anionic polyester of propylene terephtalate.

Suitable anionic polyesters are those that are derived from terephtalic acid, 5-sulfoisophtalic acid or the salt of 5-sulfoisophtalic acid, from ethylene glycol or polyethylene glycol, propylene glycol or polypropylene glycol and polyalkyleneglycol monoalkyl ether, and optionally from further monomers having 3 to 6 functions capable of polycondensation, in particular acid, alcohol or ester functions. In particular, suitable polyesters comprise structural units (I) to (III) :

(I) $-[(OCHR^1-CHR^2)_a-O-OC-Ar-CO-]_d$

(II) $-[(OCHR^3-CHR^4)_b-O-OC-sAr-CO-]_e$

(III) $-[(OCHR^5-CHR^6)_c-OR^7]_f$

wherein:

a, b and c are from 1 to 200;
d, e and f are from 1 to 50;
Ar is a 1,4-substituted phenylene;
sAr is 1,3-substituted phenylene substituted in position 5 with $SO_3Me$;
Me is Li, K, Mg/2, Ca/2, Al/3, ammonium, mono-, di-, tri-, or tetraalkylammonium wherein the alkyl groups are ($C_1$-$C_{22}$) alkyl or ($C_2$-$C_{10}$) hydroxyalkyl, or mixtures thereof;

$R^1$, $R^2$, $R^3$, $R^4$, $R^5$ and $R^6$ are independently selected from H or ($C_1$-$C_{18}$) n- or iso-alkyl preferably methyl; and $R^7$ is a linear or branched ($C_1$-$C_{18}$) alkyl, or a linear or branched ($C_2$-$C_{30}$) alkenyl, or a cycloalkyl group with 5 to 9 carbon atoms, a ($C_6$-$C_{30}$) aryl group or a ($C_6$-$C_{50}$) arylalkyl group preferably phenyl or benzyl.

Preferred are anionic polyesters as defined above, where $R^1$ to $R^6$ independently are H or methyl, $R^7$ is methyl, a, b and c are a number from 1 to 200, preferably 1 to 20, more preferably a and b are 1 and c can be a number from 2 to 10. Herein d is a number between 1 and 25, preferably between 1 and 10, more preferably between 1 and 5, e is a number between 1 and 30, preferably between 2 and 15, more preferably between 3 and 10, and f is a number between 0.05 and 15, preferably between 0.1 and 10, more preferably between 0.25 and 3.

It is clear to the expert that these values are always statistical average values with a natural distribution that varies from system to system.

Besides linear polyesters which result from the structural units (I) to (III) above, crosslinked or branched polyester structures are also possible for the purpose of the invention, the polymer as such further comprising a cross-linking polyfunctional structural unit with at least 3 to at most 6 functional groups capable of the esterification reaction. Functional groups may be for example acid, alcohol, ester, anhydride or epoxy groups. The weight fraction of the cross-linking monomers, based on total mass of the polyesters, is preferably 0 to 10%, more preferably 0 to 5%, most preferably 0 to 3%. Preferably the anionic polyester is a linear anionic polyester with no cross-linking.

The polyesters according to the invention generally have a number average molecular weight in the range of 700 to 50000 g/mol, preferably 800 to 25000 g/mol, more preferably 1000 to 15000 g/mol, most preferably 1200 to 12000 g/mol.

Suitable soil release polymers are sold by Clariant under the TexCare® series of polymers, e.g. TexCare® SRN240 and especially TexCare® SRA300. Other suitable soil release polymers are sold by Solvay under the Repel-o-Tex® series of polymers, e.g. Repel-o-Tex® SF2 and Repel-o-Tex® Crystal.

Second polymer

The second polymer is carboxymethylcellulose or a derivative thereof. Preferably, the second polymer is selected from carboxymethyl cellulose, a hydrophobically modified carboxymethyl cellulose or a mixture thereof, more preferably a hydrophobically modified carboxymethylcellulose.

As used herein, the term "celluloses" includes natural celluloses and synthetic celluloses. Celluloses can be extracted from plants or produced by microorganisms.

Suitable carboxymethyl cellulose has a structure according to the formula:

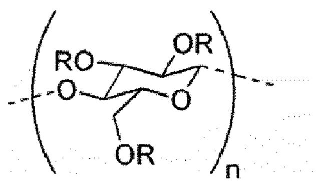

$R_a$ = -H
$R_b$ = $-CH_2CO_2Na$

Cellulose has three groups (R) available for substitution per repeating unit. For carboxymethyl cellulose, each R group will comprise either Ra or Rb with the 'degree of substitution' being defined as the average number of R groups per repeating cellulose unit that comprise Rb. Obviously in the case of carboxymethylcellulose, not all R groups will be Ra. The Rb moiety is the carboxymethyl substituent. The carboxymethyl cellulose has an average degree of carboxymethyl substitution of from 0.3 to 0.9, preferably from 0.4 and preferably to 0.8.

It may be preferred for the carboxymethyl cellulose to be further substituted with a hydrophobic moiety according to the following structure to give a hydrophobically modified carboxymethyl cellulose

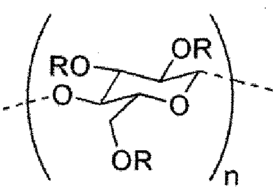

$R_a$ = -H

$R_b$ = $-CH_2CO_2Na$

$R_c$ = 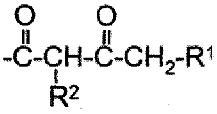

$R_d$ = 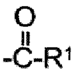

wherein, each R group will comprise either Ra, Rb, Rc, or Rd in which R1 and R2 are independently selected from alkyl or alkenyl chains having from 5 to 22 carbon atoms. The Rb moiety is the carboxymethyl substituent. Obviously for hydrophobically modified carboxymethylcellulose, at least one Rb group will be present. The Rc and Rd moieties are examples of possible hydrophobic substituents. Alternative hydrophobic substituents will be recognized by persons skilled in the art. The 'degree of carboxymethyl substitution' is defined as the average number of R groups per repeating cellulose unit that comprise Rb. The carboxymethyl cellulose has an average degree of carboxymethyl substitution of from 0.3 to 0.9, preferably from 0.4 and preferably to 0.8. The 'degree of hydrophobic moiety substitution' is defined as the average total number of R groups per repeating cellulose unit that comprise Rc, and/or Rd. Preferably, the average degree of hydrophobic moiety substitution is in the range of from 0.001 to 0.2.

The carboxymethylcellulose preferably has a molecular weight of from 10,000 Da to 300,000 Da, preferably from 50,000 Da to 250,000 Da, most preferably from 100,000 Da to 200,000 Da.

In order to further improve the dissolution performance of the carboxymethyl cellulose, it may be preferred for a combination of smaller molecular weight and larger molecular weight carboxymethyl celluloses to be used, typically in such a manner so that a bimodal molecular weight distribution is achieved. Preferably, the carboxymethyl cellulose has a bimodal molecular weight distribution, wherein the first molecular weight modal has a peak in the range of from 10,000 Da to below 100,000 Da, and wherein the second molecular weight modal has a peak in the range of from 100,000 Da to 300,000 Da. Preferably, the first molecular weight modal has a peak in the range of from 20,000 Da or from 30,000 Da, and preferably to 90,000 Da, or to 80,000 Da, or to 70,000 Da. Preferably, the second second molecular weight modal has a peak in the range of from 120,000 Da, or from 150,000 Da, and preferably to 250,000 Da, or to 200,000 Da.

It may also be preferred for the carboxymethyl cellulose to have a degree of substitution (DS) in the range of from 0.01 to 0.99 and a degree of blockiness (DB) such that the sum of DS+DB is at least 1.00, preferably at least 1.05, or at least 1.10, or at least 1.15, or at least 1.20, or at least 1.25, or at least 1.30, or at least 1.35, or at least 1.40, or at least 1.45, or at least 1.50.

Preferably, the carboxymethyl cellulose has a degree of substitution (DS) in the range of from 0.01 to 0.99 and a degree of blockiness (DB) such that the sum of $DB+2DS-DS^2$ is at least 1.20, or at least 1.25, or at least 1.30, or at least 1.35, or at least 1.40, or at least 1.45, or at least 1.50.

Preferably, the carboxymethyl celluose is a hydrophobically modified carboxymethylcellulose having a degree of substitution (DS) of from 0.01 to 0.99 and a degree of blockiness (DB) such that either DS+DB is of at least 1.00 and/or $DB+2DS-DS^2$ is at least 1.20.

A typical method to determine the degree of substitution (DS) of carboxymethyl cellulose (CMC) is described in more detail below. A typical method to determine the degree of blockiness (DB) of carboxymethyl cellulose (CMC) is described in more detail below.

Methods of producing carboxymethyl cellulose are well described in the art.

Various methods of producing hydrophobically modified carboxymethyl cellulose are disclosed in the art.

Carboxymethylcellulose polymers include Finnfix GDA (sold by CP Kelco), a hydrophobically modified carboxymethylcellulose, e.g. the alkyl ketene dimer derivative of carboxymethylcellulose sold under the tradename Finnfix SH1 (CP Kelco), or the blocky carboxymethylcellulose sold under the tradename Finnfix V (sold by CP Kelco).

Method to determine degree of carboxymethyl substitution (DS) of a carboxymethyl cellulose (CMC) :The DS was determined by igniting CMC to ash at high temperature (650°C) for 45 minutes in order to remove all the organic material. The remaining inorganic ashes were dissolved in distilled water and methyl red added. The sample was titrated with 0.1M hydrochloric acid until the solution turned pink. The DS was calculated from the amount of titrated acid (b ml) and the amount of CMC (G g) using the formula below.

$$DS = 0.162 * \{(0.1*b/G) / [1-(0.08*0.1*(b/G)]\}$$

Alternatively, the DS of a substituted cellulose may be measured by conductimetry or 13C NMR.

Method to determine degree of blockiness (DB) of a carboxymethyl cellulose (CMC): In the case of a substituted cellulose, the DB may correspond to the amount (A) of non-substituted glucose units released after a specific enzymatic hydrolysis with the commercial endoglucanase enzyme (Econase CE, AB Enzymes, Darmstadt, Germany) divided by the total amount of non-substituted glucose units released after acid hydrolysis (A+B). The enzymatic activity is specific to non-substituted glucose units in the polymer chain that are directly bounded to another non-substituted glucose unit.

The enzymatic degradation is performed using the enzyme (Econase CE) in a buffer at pH 4.8 at 50°C for 3 days. To 25 ml of substituted cellulose sample, 250 mL of enzyme is used. The degradation is stopped by heating the samples to 90°C and keeping them hot for 15 minutes. The acid hydrolysis for both substitution pattern and blockiness is carried out in perchloric acid (15 min in 70% $HClO_4$ at room temperature and 3 hours in 6.4% $HClO_4$ at 120°C). The samples are analysed using Anion Exchange Chromatography with Pulsed Amperiometric Detection (PAD detector: BioLC50 (Dionex, Sunnyvale, California, USA)). The HPAEC/PAD system is calibrated with 13C NMR. The monosaccharides are separated at 35°C using a flow rate of 0.2ml/min on a PA-1 analytical column using 100mM NaOH as eluent with increasing sodium acetate (from 0 to 1M sodium acetate in 30 mins). Each sample is analysed three to five times and an average is calculated. The number of unsubstituted glucose that were directly linked to at least one substituted glucose (A), and the number of unsubstituted glucose that were not directly linked to a substituted glucose (B) are deduced and the DB of the substituted cellulose sample is calculated: DB = B/(A+B).

Method to determine degree of hydrophobic moiety substitution of a hydrophobically modified carboxymethyl cellulose (CMC): The degree of hydrophobically moiety substitution is determined using FT-IR spectroscopy.

Non-soap anionic surfactant

Preferably, the non-soap anionic surfactant comprises linear alkylbenzene sulphonate, alkoxylated alkyl sulphate or a mixture thereof. More preferably, the non-soap anionic surfactant is a mixture of linear alkylbenzene sulphonate and alkoxylated alkyl sulphate, more preferably a mixture of linear alkylbenzene sulphonate and ethoxylated alkyl sulphate.

Preferably, the weight ratio of linear alkylbenzene sulphonate to alkoxylated alkyl sulphate, more preferably linear alkylbenzene sulphonate to ethoxylated alkyl sulphate is from 1:2 to 20:1, preferably from 1.1:1 to 15:1, more preferably from 1.2:1 to 10:1, even more preferably from 1.3:1 to 5:1, most preferably from 1.4:1 to 3:1.

The weight ratio of linear alkylbenzene sulphonate to ethoxylated alkyl sulphate may be from 1:10 to 20:1, preferably from 1:7 to 3:1, more preferably from 1:5 to 1.5:1.

Preferably, the weight ratio of total anionic surfactant (i.e. all anionic surfactant present in the liquid composition) : non-ionic surfactant in the liquid composition is between 5:1 and 23:1.

Preferably, the non-soap anionic surfactant is neutralised with an amine, preferably selected from monoethanolamine, diethanolamine, triethanolamine or a mixture thereof, more preferably monoethanolamine.

Without wishing to be bound by theory, it is also believed that a higher level of maintained anionic surfactant might also facilitate next time cleaning upon resoiling of the fabrics, i.e. fostering more available chemistry in next cycle as well as acting as a soil binding barrier, facilitating its removal accordingly. Such 're-use' of anionic surfactant carried from the previous wash has environmental benefits due to less intensive use of resources required to achieve the same end benefit.

Process of making

Those skilled in the art will know how to make the water-soluble unit dose article and liquid laundry detergent composition of the present invention using commonly known manufacturing techniques.

Process for washing

A further aspect of the present invention is a process for washing fabrics comprising the steps of;

a. Combining a water-soluble unit dose article according to the present invention with sufficient water to dissolve the water-soluble film and dilute the laundry detergent composition by a factor of between 300 and 3000 fold, preferably from 300 to 800 fold to form a wash liquor;
b. Combining the wash liquor with at least one fabric to be washed,

optionally wherein the at least one fabric comprises residual surfactant, preferably non-soap anionic surfactant deposited thereon. The non-soap anionic surfactant is as described above. The fabric preferably is a terry towel, comprising natural fibers, preferably cotton fibers.

Use

Another aspect of the present invention is the use of a combination of a first polymer and a second polymer to improve retention of anionic surfactant remaining on fabrics comprising natural preferably cotton fibers, following a wash operation, wherein the first and second polymers are formulated into a water-soluble unit dose article and wherein the first polymer is a polyester terephthalate and the second polymer is carboxymethylcellulose or a derivative thereof.

The first polymer and the second polymer are as described above. Preferably the residual surfactant is non-soap anionic surfactant as described above. The fabric preferably is a terry towel, comprising natural fibres, preferably cotton fibers.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

EXAMPLES

The impact of formulating a dual polymer system according to the invention, comprising a polyester based soil release polymer and CMC, in a soluble unit dose laundry composition, on amount of remaining anionic surfactant on fabrics at the end of a wash cycle has been assessed on cotton terry towels through running a full scale washing test, extracting the remaining anionic surfactant from said fabrics and quantifying the amount of said anionic surfactant through analytical titration.

Formula compositions :

The following base formula composition was prepared through mixing of the individual components.

| Component | Level (100% active basis - wt%) |
|---|---|
| HLAS anionic surfactant | 22.8 |
| HAE3S (C24AE3S) anionic surfactant | 15.6 |
| C24AE7 nonionic surfactant | 3.9 |
| Citric acid | 0.8 |
| Palm Kernel Fatty acid | 6.3 |
| HEDP chelant | 2.4 |
| Ethoxylated polyethyleneimine (PEI600EO20)* | 3.4 |
| Brightener 49 | 0.35 |
| Hueing dye | 0.04 |
| Monoethanolamine | 10.8 |
| Water | 10.6 |
| 1,2 Propanediol | 11.2 |
| Glycerine | 4.0 |
| DiPropyleneGlycol | 4.1 |
| Minors (preservatives, antioxidant, anti-foam, perfume, dye Hydrogenated Castor Oil structurant, protease & amylase enzyme, processing aids) | Balance to 100% |
| *ethoxylated polyethyleneimine having an average degree of ethoxylation of 20 per EO chain and a polyethyleneimine backbone with MW of about 600 | |

Pre-dissolved polymer solutions in demineralized water have been prepared separately by mixing the polymer starting material in demineralized water.

- Texcare SRA300 solution : 1.5% active in water
- CMC solution (Finnfix GDA ex CP Kelco) : 2% active in water

Test legs :

Pre-dissolved polymer solutions were mixed with 22.7g of base formulation such that below tabulated active polymer levels were obtained. To calculate the active polymer in the respective test legs the add-on water from the pre-dissolved polymer solutions was not considered, e.g. 0.68g of 100% active polymer has been added on top of 22.7g base formulation to obtain a 3% active polymer formula composition, such that all base leg active components were kept constant across all test legs, as well as the total polymer content been kept constant at 3% across all test legs (except for the nil polymer reference). Test leg D describes a formula composition comprising a dual polymer system according to the invention, contrary to test legs A till C which are comparative examples outside the scope of the invention, lacking at least one of the targeted polymers.

| Wt% | Nil Polymer | Texcare SRA300 | CMC | Texcare SRA300 / CMC |
|---|---|---|---|---|
| | **A** | **B** | **C** | **D** |
| | 0% | 3% | 3% | 1.5% / 1.5% |

Test method:

Wash cycle :

The nil polymer base and mixed polymer-base compositions were added together with 10 terry cotton fabric tracers (Type : Calderon RN37004-LL-B2 fabrics, 59g per tracer - sourced from Calderon Textiles LLC, Indianapolis) in a Miele W1714 automatic washing machine. A 30 minutes express cycle was selected with 15 gpg water at 30°C. This washing step has been repeated 3 more times. After 4 cycles the cotton terry towel tracers were line dried and submitted for analytical quantification of remaining anionic surfactant content.

Analytical quantification of remaining anionic surfactant content:

The anionic surfactant (LAS) remaining on the fabric tracers has been extracted from the fabric tracers and analytically quantified following the test methods described herein :

Extraction process :

The anionic surfactant has been extracted from the fabric tracers using an Accelerated Solvent Extractor (ASE) type Dionex ASE100. Herefore 22-25g of fabric sample was put within a 66ml ASE sample holder and extracted using an 800ml chloroform / 200ml acetonitrile / 25ml acetic acid extraction solvent mixture.

Extraction conditions were set as follow :

- Temperature : 80°C
- Static time : 5 minutes
- Flush volume : 70%
- Purge time 120s
- Static cycle : 2

The collected extract was then further diluted to 100ml with chloroform using 100 ml volumetric flasks. After mixing 25 ml of the resulting mixture has been submitted for analytical quantification of the extracted anionic surfactant content.

Anionic surfactant titration process :

The amount of extracted anionic surfactant has been analytically quantified through manual titration. The method is based on the dye-complexing property of anionic surfactants. The extraction sample containing the anionic surfactants dissolved in chloroform (25 mL) is mixed with 20 mL of a mixed indicator solution of cationic and anionic-complexing dyes (dimidium bromide and disulfine blue VN150, both available from Sigma) in water. The anionic surfactant cationic

dye complex is soluble in the organic layer and gives it a red-pink color. The surfactant is titrated with a 0.004N solution of Hyamine 1622 (available from Sigma), with the Hyamine 1622 preferentially displacing the dye in the dye-surfactant complex that produces the pink color. As the Hyamine 1622 displaces the dye, the color in the organic layer changes from pink to gray at the endpoint. This is where all the red dye has been replaced with Hyamine 1622. If excess Hyamine 1622 is added, it complexes the anionic dye, giving blue color to the organic layer indicating that the endpoint has been overshot. The amount of anionic surfactant present in the extracted solution can consequently be calculated from the amount of titrant used to reach the end point, and back-calculated towards amount of anionic surfactant present on the original fabric tracers trough considering the starting weight of the fabric in the extraction process.

Test results :

Remaining anionic surfactant levels on the fabric have been summarized in the table below. The data clearly show that a soluble unit dose laundry composition comprising a dual polymer system according to the invention, comprising a polyester based soil release polymer and CMC, shows a synergistic, statistically superior surfactant retention profile on cotton terry towels compared to nil polymer, single polyester soil release polymer and single CMC polymer systems outside the scope of the invention. This is especially surprising as the single polymer systems even show an inferior surfactant retention profile compared to the nil polymer reference.

Cotton terry towel:

| **Test leg:** | **Remaining anionic surfactant content (mg LAS /g fabric)** |
|---|---|
| **D : dual polymer system (according to the invention)** | **0.74s** |
| A : nil polymer | 0.69 |
| C : single polymer system | 0.68 |
| B : single polymer system | 0.66 |

## Claims

**1.** A water-soluble unit dose article comprising a water-soluble film and a liquid laundry detergent composition, wherein the liquid laundry detergent composition comprises;

a. between 0.1% and 10%, preferably between 0.15% and 5% even more preferably between 0.2% and 4%, most preferably between 0.25 % and 3% by weight of the liquid laundry detergent composition of a first polymer, wherein the first polymer is a polyester terephthalate; and
b. between 0.1% and 10%, preferably between 0.2% and 5% even more preferably between 0.3% and 4%, most preferably between 0.4% and 3% by weight of the liquid laundry detergent composition of a second polymer, wherein the second polymer is carboxymethylcellulose or a derivative thereof; and
c. up to 50%, preferably between 5% and 50%, more preferably between 7.5% and 45%, even more preferably between 10% and 40%, or even more preferably between 12% and 37%, most preferably between 15% and 30% by weight of the liquid laundry detergent composition of a non-soap anionic surfactant.

**2.** The water-soluble unit dose article according to claim 1, wherein the liquid laundry detergent composition comprises between 0.1% and 10%, preferably between 0.2% and 7%, more preferably between 0.3% and 5% by weight of the liquid laundry detergent composition of a combination of the first polymer and the second polymer.

**3.** The water-soluble unit dose article according to any of the preceding claims wherein the first polymer is a polyester terephthalate backbone grafted with one or more anionic groups.

**4.** The water-soluble unit dose article according to any preceding claims wherein the first polymer is a polyester terephthalate comprising the structural units (I) to (III):

(I) $-[(OCHR^1\text{-}CHR^2)_a\text{-}O\text{-}OC\text{-}Ar\text{-}CO\text{-}]_d$

(II) $-[(OCHR^3\text{-}CHR^4)_b\text{-}O\text{-}OC\text{-}sAr\text{-}CO\text{-}]_e$

(III) $-[(OCHR^5-CHR^6)_c-OR^7]_f$

wherein:

a, b and c are from 1 to 200;
d, e and f are from 1 to 50;
Ar is a 1,4-substituted phenylene;
sAr is 1,3-substituted phenylene substituted in position 5 with $SO_3Me$;
Me is Li, K, Mg/2, Ca/2, Al/3, ammonium, mono-, di-, tri-, or
tetraalkylammonium wherein the alkyl groups are $(C_1-C_{22})$ alkyl or $(C_2-C_{10})$ hydroxyalkyl, or mixtures thereof;
$R^1$, $R^2$, $R^3$, $R^4$, $R^5$ and $R^6$ are independently selected from H or $(C_1-C_{18})$ n- or iso-alkyl preferably methyl; and
$R^7$ is a linear or branched $(C_1-C_{18})$ alkyl, or a linear or branched $(C_2-C_{30})$ alkenyl, or a cycloalkyl group with 5 to 9 carbon atoms, a $(C_6-C_{30})$ aryl group or a $(C_6-C_{50})$ arylalkyl group preferably phenyl or benzyl.

**5.** The water-soluble unit dose article according to claim 4 wherein the anionic polyester comprises the structural units (I) to (III), wherein :

$R^1$ to $R^6$ independently are H or methyl,
$R^7$ is methyl,
a, b and c are a number from 1 to 20, preferably a and b are 1 and c is a number from 2 to 10,
d is a number between 1 and 25, preferably between 1 and 10, more preferably between 1 and 5,
e is a number between 1 and 30, preferably between 2 and 15, more preferably between 3 and 10, and
f is a number between 0.05 and 15, preferably between 0.1 and 10, more preferably between 0.25 and 3.

**6.** The water-soluble unit dose article according to any preceding claims wherein the first polymer is an anionic polyester of propylene terephtalate.

**7.** The water-soluble unit dose article according to any preceding claims wherein the second polymer is selected from carboxymethyl cellulose, a hydrophobically modified carboxymethyl cellulose or a mixture thereof, more preferably a hydrophobically modified carboxymethylcellulose.

**8.** The water-soluble unit dose article according to claim 7 wherein the second polymer is a hydrophobically modified carboxymethylcellulose having a degree of substitution (DS) of from 0.01 to 0.99 and a degree of blockiness (DB) such that either DS+DB is of at least 1.00 and/or $DB+2DS-DS^2$ is at least 1.20.

**9.** The water-soluble unit dose article according to any preceding claims wherein the non-soap anionic surfactant comprises linear alkylbenzene sulphonate, alkoxylated alkyl sulphate or a mixture thereof, more preferably a mixture thereof wherein the ratio of linear alkylbenzene sulphonate to alkoxylated alkyl sulphate preferably the ratio of linear alkylbenzene sulphonate to ethoxylated alkyl sulphate is from 1:2 to 20:1, preferably from 1.1:1 to 15:1, more preferably from 1.2:1 to 10:1, even more preferably from 1.3:1 to 5:1, most preferably from 1.4:1 to 3:1.

**10.** The water-soluble unit dose article according to any preceding claims wherein the liquid laundry detergent composition comprises between 0% and 10%, preferably between 0.01% and 8%, more preferably between 0.1% and 6%, most preferably between 0.15% and 4% by weight of the liquid laundry detergent composition of the non-ionic surfactant, preferably wherein the non-ionic surfactant is selected from alcohol alkoxylate, an oxo-synthesised alcohol alkoxylate, Guerbet alcohol alkoxylates, alkyl phenol alcohol alkoxylates or a mixture thereof.

**11.** The water-soluble unit dose article according to any preceding claims wherein the liquid laundry detergent composition comprises between 1.5% and 20%, more preferably between 2% and 15%, even more preferably between 3% and 10%, most preferably between 4% and 8% by weight of the liquid detergent composition of soap, preferably a fatty acid salt, more preferably an amine neutralized fatty acid salt, wherein preferably the amine is an alkanolamine more preferably selected from monoethanolamine, diethanolamine, triethanolamine or a mixture thereof, more preferably monoethanolamine.

**12.** The water-soluble unit dose article according to any preceding claims wherein the liquid laundry detergent composition comprises a cationic polysaccharide, preferably selected from cationically modified hydroxyethyl cellulose, cationically modified hydroxypropyl cellulose, cationically and hydrophobically modified hydroxyethyl cellulose, cationically and hydrophobically modified hydroxypropyl cellulose, or a mixture thereof, more preferably cationically modified hydroxyethyl cellulose, cationically and hydrophobically modified hydroxyethyl cellulose, or a mixture thereof.

**13.** The water soluble unit dose according to any preceding claims wherein the liquid laundry detergent composition comprises an alkoxylated polyethyleneimine, preferably an ethoxylated polyethyleneimine.

**14.** A process for washing fabrics comprising the steps of;

a. Combining a water-soluble unit dose article according to any preceding claims with sufficient water to dissolve the water-soluble film and dilute the laundry detergent composition by a factor of between 300 and 3000 fold, preferably from 300 to 800 fold to form a wash liquor;
b. Combining the wash liquor with at least one fabric to be washed, wherein the at least one fabric comprises natural preferably cotton fibres and wherein the fabric preferably is a terry towel.

**15.** Use of a combination of a first polymer and a second polymer to improve retention of anionic surfactant remaining on fabrics, preferably terry towels, comprising natural preferably cotton fibres, following a wash operation, wherein the first and second polymers are formulated into a water-soluble unit dose article and wherein the first polymer is a polyester terephtalate polymer and the second polymer is carboxymethylcellulose or a derivative thereof.

FIG. 1.

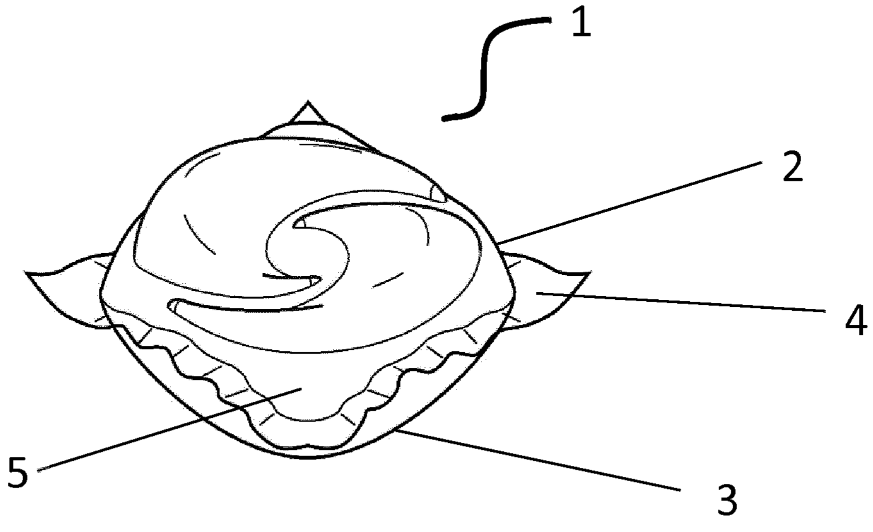

Europäisches Patentamt
European Patent Office
Office européen des brevets

# EUROPEAN SEARCH REPORT

Application Number
EP 17 18 5942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 3 101 106 A1 (PROCTER & GAMBLE [US]) 7 December 2016 (2016-12-07)<br>* paragraph [0035] - paragraph [0038] *<br>* paragraph [0057] - paragraph [0059] *<br>* paragraph [0062] - paragraph [0063] *<br>* paragraphs [0100], [0124], [0129]; claim 13 *<br>* paragraph [0131]; table 1; compounds A-C * | 1-11, 13-15<br>12 | INV.<br>C08G63/183<br>C11D1/02<br>C11D3/22<br>C11D3/37<br>C08L1/28<br>C11D11/00<br>C11D17/04 |
| X<br><br>Y | US 2014/296124 A1 (HULSKOTTER FRANK [DE] ET AL) 2 October 2014 (2014-10-02)<br>* paragraph [0020] - paragraph [0023] *<br>* paragraph [0024] - paragraph [0025] *<br>* paragraphs [0056], [0184] *<br>* paragraph [0131] *<br>* paragraph [0238]; compounds Detergent A-B * | 1-15<br><br>12 | |
| X | WO 2016/048969 A1 (PROCTER & GAMBLE [US]) 31 March 2016 (2016-03-31)<br>* page 9, line 25 - page 10, last line *<br>* page 11, paragraph 1 - paragraph 2 *<br>* page 25, line 13 - line 18 *<br>* page 37, line 6 - line 16 *<br>* page 42, line 13 - page 43, line 28 *<br>* page 48, line 27 - page 50, line 13 *<br>* page 50, line 15 - last line * | 1-15 | TECHNICAL FIELDS SEARCHED (IPC)<br>C08G<br>C11D<br>C08L |
| X | US 2016/340611 A1 (SCHEIBEL JEFFREY JOHN [US] ET AL) 24 November 2016 (2016-11-24)<br>* paragraph [0107] *<br>* paragraph [0120] - paragraph [0130] *<br>* paragraph [0131] - paragraph [0132] *<br>* paragraphs [0186], [0198] *<br>* paragraph [0194] *<br>* paragraph [0225] - paragraph [0228]; examples 4-6; tables 20-22 *<br>* paragraph [0242] * | 1-15 | |

The present search report has been drawn up for all claims

2

| Place of search | Date of completion of the search | Examiner |
|---|---|---|
| The Hague | 12 February 2018 | Cetinkaya, Murat |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 18 5942

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2018

| Patent document cited in search report | Publication date | Patent family member(s) | Publication date |
|---|---|---|---|
| EP 3101106 A1 | 07-12-2016 | AR 104888 A1 | 23-08-2017 |
| | | CA 2986249 A1 | 08-12-2016 |
| | | EP 3101106 A1 | 07-12-2016 |
| | | US 2016355766 A1 | 08-12-2016 |
| | | WO 2016196699 A1 | 08-12-2016 |
| US 2014296124 A1 | 02-10-2014 | AU 2014241193 A1 | 15-10-2015 |
| | | CA 2900645 A1 | 02-10-2014 |
| | | CA 2907499 A1 | 02-10-2014 |
| | | CL 2015002865 A1 | 13-05-2016 |
| | | CN 105073966 A | 18-11-2015 |
| | | CN 105102600 A | 25-11-2015 |
| | | EP 2978830 A1 | 03-02-2016 |
| | | EP 2978831 A1 | 03-02-2016 |
| | | JP 6081657 B2 | 15-02-2017 |
| | | JP 6081658 B2 | 15-02-2017 |
| | | JP 2016519184 A | 30-06-2016 |
| | | JP 2016519704 A | 07-07-2016 |
| | | US 2014296124 A1 | 02-10-2014 |
| | | US 2014296127 A1 | 02-10-2014 |
| | | US 2016075970 A1 | 17-03-2016 |
| | | WO 2014160820 A1 | 02-10-2014 |
| | | WO 2014160821 A1 | 02-10-2014 |
| | | ZA 201505769 B | 29-03-2017 |
| WO 2016048969 A1 | 31-03-2016 | EP 3197993 A1 | 02-08-2017 |
| | | JP 2017527670 A | 21-09-2017 |
| | | US 2016090552 A1 | 31-03-2016 |
| | | WO 2016048969 A1 | 31-03-2016 |
| US 2016340611 A1 | 24-11-2016 | US 2016340611 A1 | 24-11-2016 |
| | | WO 2016191103 A1 | 01-12-2016 |

EPO FORM P0459

For more details about this annex : see Official Journal of the European Patent Office, No. 12/82